# EUROPEAN PATENT APPLICATION

(11) **EP 2 458 885 A1**
(43) Date of publication of application: **30.05.2012**
(21) Application number: 10192427.2
(22) Date of filing: 24.11.2010
(51) Int. Cl.: H04N 21/434

(54) **A method and apparatus for controlling a display on a host device**

(71) Applicant: SmarDTV S.A., 1033 Cheseaux-sur-Lausanne (CH)
(72) Inventor: Deprez, Olivier, 13600, La Ciotat (FR); Ryan, Conor, 1008, Prilly (CH)
(74) Representative: Leman Consulting S.A.

(57) **Abstract**

The present invention may be deployed in a system comprising a Common Interface Conditional Access Module (CICAM) connected to a host device having a high definition display in which the CICAM and the host device communicate using a Common Interface Plus (CI+) Standard. A method and an apparatus are disclosed for using the CICAM to interactively control the display of high definition graphics on the host device's display by converting the high definition graphics into a subtitle track, sending the subtitle track from the CICAM to the host as part of the transmission stream including the audio video content, decoding the subtitle track and the video track in the host device and combining the resulting graphics for display. The generation of the high definition graphics in the CICAM is subject to user activity information fed back from the host to the CICAM.

## Description

### INTRODUCTION

The present invention relates to the domain of multimedia and more particularly to the aspect of interactive or dynamic display of information.

### STATE OF THE ART

Many households nowadays have a television set or a video display connected to a set top box for viewing some kind of multimedia content or more specifically audio/video content. The television set or the set top box usually includes a receiver to receive broadcasts or other forms of transmission of content and a decoder to select a channel or service and may further comprise means to decrypt the service should it be transmitted in encrypted form. In the case where the viewing of the content is subject to the perception of a fee by a service provider or content owner it is usual for the set top box or television set to communicate with a security module, which is usually portable and detachable from the set top box or television set. The security module holds keys necessary to decrypt the content and rights proving that the user of the equipment has procured the necessary viewing rights from the provider.

In the Pay-TV industry, there exists a specification known as the Common Interface Specification which standardises the way in which a conditional access module or CAM communicates with a host device. By host device it is understood to include a set top box having a decoder and a receiver and being connected to a display unit or a television set with a receiver and a decoder. The CAM includes means to decrypt encrypted transmissions received from service providers via the receiver and is associated with a security module which holds the security information such as rights and cryptographic keys. A CAM which is configured to communicate according to the Common Interface Specification is known as a Common Interface Conditional Access Module or CICAM.

Common Interface Plus or CI+ is a specification which extends the Common Interface Specification and it has been widely accepted by many consumer electronics manufacturers and Pay-TV technology companies. This specification sets standards for communicating between the CICAM and the host allowing for a user to manage navigation through menus within an interactive TV application using a remote control device. In CI+ v1.2 for example, the CICAM is authorised to take over the graphic layer of the host allowing the user, through his CICAM, to interact with the TV application by accessing menus or list displays or enter pin codes for example. In order to allow the user to interact with the TV by launching an application on the host, an MHEG-5 application for example, which allows for file exchange and data exchange between the CAM and the host in order to achieve interactivity between the user and the TV. Using this means the user can navigate through on-screen menus or enter data. The CI+ standard however only supports graphics resolution of up to 720x576 pixels and so no high definition (HD) graphics manipulation is possible i.e. no processing of graphics with resolution higher than 720x576 pixels. This resolution corresponds to what is generally accepted in the industry as being of standard definition (SD).

Since more and more high definition (HD) TV displays are being used and there is a growing demand for users to be able to take advantage of the high definition (HD) capabilities of the displays by using sophisticated graphics for interactivity sessions, the limitation posed by the CI+ standard is a major drawback. Furthermore, standard definition (SD) graphics rendering on high definition (HD) displays is very poor and since most displays being used now are of high definition type (HD), interactive sessions will be of poor quality. Another limitation is that right-to-left scripts such as Arabic and Hebrew are poorly represented.

In European Patent Application Publication number EP 1,954,054 A1, a system and a method are disclosed for allowing multimedia receivers to set up interactive services to be activated during the viewing of video content. To achieve this, the service provider generates an interactive mark associated with audio/video content and inserts the mark into Internet Protocol (IP) packets, which are associated with audio/video content packages. The interactive mark is intended to enable an interactive service during a period of the playing of the audio/video content. IP packets with the mark and with the content are transmitted to a plurality of users who can then synchronise the marks with their associated content. The document further teaches that the interactive mark may be embedded in the subtitle track. However, the interactivity of this system does not include receiving feedback information in order to influence the sequence of events involved in the interactive service.

A method and apparatus for dynamic displays for digital cinema is described in International Patent Application Publication number WO 10002361 A1. The subject matter disclosed herein allows for the display of dynamic information, which may be a graphic object, on a digital display. Although the system described provides for a dynamic information display it does not provide for any interactivity in the sense that it does not react to a viewer's intervention. Furthermore, the information displayed dynamically is not integrated with the audio/video content and is not even displayed at the same time.

### BRIEF SUMMARY OF THE INVENTION

It is a goal of the present invention to allow for a CICAM to control a host device to display high resolution graphics as part of an interactive graphical user interface or an interactive graphical display. This is achieved by providing a method for controlling a host device to render a graphic having a first resolution on a display having the first resolution, said method comprising:
receiving a first transport stream in a control module, said first transport stream comprising audio/video content;
executing a controller application in the control module, said execution at least:
   generating data representing the graphic having the first resolution;
   converting said data to give a subtitle track; and
   combining the subtitle track with the first transport stream to give a
   second transport stream;
transmitting the second transport stream from the control module to the host device;
executing a host application in the host device, said execution at least:
   extracting the subtitle track from the second transport stream;
   decoding the subtitle track in the host device to give the graphic having the first resolution; and
   rendering the graphic having the first resolution on the display.

The present invention further provides a control module comprising:
a memory to store a host application;
means to load the host application into a host device via an application interface;
means to generate data representing a graphic;
means to receive a first transport stream via a transport stream interface;
means to convert the data representing the graphic to give a subtitle track;
means to combine the subtitle track with the first transport stream to give a second transport stream; and
means to transmit the second transport stream to the host device via the transport stream interface.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1 illustrates a system in which an embodiment of the present invention may be deployed.
Fig. 2 illustrates a method for avoiding program clock reference jitter according to an embodiment of the present invention.
Fig. 3 illustrates a system in which another embodiment of the present invention may be deployed.

### DETAILED DESCRIPTION

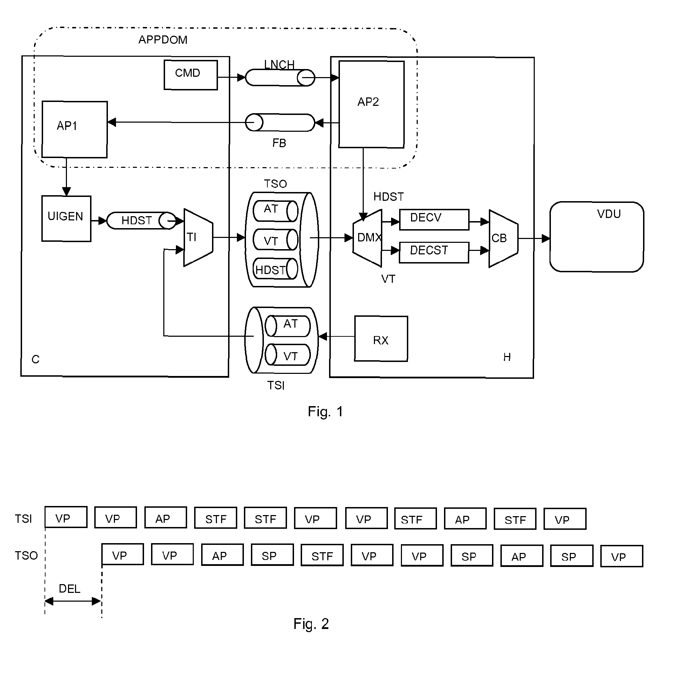

Fig. 1 shows a system in which an embodiment of the present invention may be deployed. A control module (C), which may be a conditional access module or CAM as generally employed in the Pay-TV domain, is connected to a host device (H) via a transport stream interface. It is worth noting that the control module (C) may be a CICAM. This transport stream interface allows for audio/video content, usually in the form of an input transport stream (TSI) comprising an audio track (AT) and a video track (VT), to be transmitted from the host device (H) to the control module (C) and for an output transport stream (TSO) to be transmitted from the control module (C) to the host device (H). Although Fig.1 shows the input transport stream being received from the host device, there are other embodiments of the present invention in which the input transport stream may be received from some other source.

The host device (H) either comprises or has access to a display unit (VDU). The present invention may preferably be deployed in a system comprising a high definition (HD) display unit. By high definition (HD) it is understood to mean a definition of substantially more than the definition generally accepted within the industry as being standard definition. Such standard definition displays are adapted for displaying graphics with a resolution of between 704x480 pixels and 720x576 pixels. It is well known that high definition (HD) displays give poor results when they are used to display graphics having a standard resolution. It is therefore advantageous to have a system where the control module is enabled to control a host device to display a high resolution graphic which was generated in the control module. This is an advantage not only because it allows for the control module to be able to generate desirably complex graphics for display but also because the alternative is to have the control module control the host to display only graphics having a standard resolution, which would be poorly displayed on a high definition display. However, as was explained in the prior art section, current technology does not allow for high resolution graphics on the display to be manipulated via the CICAM.

According to an embodiment of the present invention, the host device further comprises a receiver (RX) for receiving transmissions or broadcasts or otherwise acquired audio/video content. According to another embodiment of the present invention, the control module comprises its own receiver for receiving transmissions or broadcasts or otherwise acquired audio/video content. Depending on the format of the received transmission, the content may be decoded to give the input transport stream (TSI). In one embodiment of the present invention the input transport stream is in encrypted format while in another embodiment it is in clear format. In the case where the input transport stream is in encrypted format it may be decrypted by the control module thanks to an associated security module having the necessary rights and cryptographic keys according to processes well known in the Pay-TV industry.

According to an embodiment of the present invention, the control module comprises recoding means, to store the incoming transport stream, or a decoded version of the incoming transport stream, onto a storage medium such as a memory, a ROM, a hard disk, a CD or the like, for playback at a deferred time. In this embodiment the recorded transport stream replaces the received input transport stream or the decoded received transport stream of embodiments which do not use the storage medium.

According to an embodiment of the invention, the control module (C) comprises a user interface generator (UIGEN). This generator (UIGEN) has means for generating a graphic intended to be displayed on the display (VDU). To be more precise, the user interface generator generates data representing a particular graphic. When that data is processed by the host device for display, the particular graphic is shown on the display. By a graphic it is understood to include one or more graphics or graphical elements which may be combined to form more or less complex graphical images, scenes or virtual interfaces. The graphic is preferably of a high resolution format. This is referred to in general terms as a high definition graphic or a graphic having high resolution. The generator is further capable of converting the data representing the high definition graphic to a high definition subtitle track (HDST). Historically, subtitle tracks were used, as their name suggests, to provide textual versions of dialog in films or TV programmes and were usually displayed on the bottom of the screen or display unit. They were also useful in providing translation of the text in a language other than the spoken language of the dialog. Nowadays the specification for subtitle tracks is rather more elaborate and allows for much more freedom and creativity including graphics objects of various dimensions and visual properties and able to be assigned to various positions of the display. The control module (C) is therefore able to generate data representing rather elaborate high resolution graphical images, scenes or virtual interfaces suitable for display on the host's (H) high definition (HD) display unit (VDU) in keeping with what is fast becoming a requirement from users in the industry.

The control module (C) can communicate with the host device (H) via file exchange and command exchange across an application interface (LNCH and FB) according to the Common Interface Specification, such as CI+ v1.2 for example. The host device and the control module are both capable of running applications in an application environment. Although an application may run on the control module and another application may run on the host device, according to a preferred embodiment of the present invention, the term application environment is used to describe a set of rules governing how an application behaves and not the physical support upon which the application runs (APPDOM in Fig. 1). MHEG-5 is a cost-effective, license-free standard interface TV middleware which is very suitable as an application environment for running the applications or applets according to a preferred embodiment of the present invention. Support for MHEG-5 is indeed obligatory according to the Common Interface Specification CI1 v1.2. As previously mentioned, with the current technological limitations of the Common Interface Specification it is not possible to process graphics objects of resolution of more than 720x576 pixels. Therefore it is not suitable for processing high resolution graphics. Other application environments which are generally known in the state of the art are MHP, HTML-5 and HbbTV.

In a preferred embodiment of the present invention applications are stored in the control module. Some applications, controller applications, may be executed on the control module and others, host applications, may be transferred to the host device for execution thereon. In other embodiments, the control module and the host device both store the applications which are intended to be run on their respective engines and the control module giving a command to run a particular application on the host device. In yet other embodiments of the present invention, applications may be included along with the audio/video content as part of the broadcast or transmission of such content. In such cases, applications may be extracted from the broadcast or transmission by the host device or by the control module or even by both. Additionally, the host device may feed back information to the control module during the execution of an application on the host device in order to influence the execution of an application on the control module. Indeed, in a preferred embodiment of the present invention, feedback information relative to a user activity is transmitted to the control module during execution of a host application. For example, a user who presses keys on a remote control device would cause feedback information comprising codes corresponding to the keys that user presses to be sent back to the control module.

According to an embodiment of the present invention, a controller application (AP1) is executed causing the control module to generate the data representing the high resolution graphic as described above and to convert this to form a subtitle track and further causing the subtitle track (HDST) comprising the high resolution graphic to be combined with the input transport stream, for example by a track inserter (TI), to form an output transport stream (TSO). The output transmission stream (TSO) is transmitted to the host device via the transport stream interface. The control module (C) launches (LNCH) a host application (AP2) or applet on the host device (H) to switch on subtitle mode and to select the subtitle track included in the output transport stream. The host application (AP2) further causes the host (H) to separate (DMX) the subtitle track from the video track and to decode the subtitle track (DECST) to form a high definition graphic. In one embodiment of the present invention the high definition graphic is displayed on the high definition display. In another embodiment of the present invention the host device further decodes the video track (DECV) and then combines (CB) the decoded video track and the high definition graphic to form a complete high definition graphical user interface which is displayed on the display, the high resolution graphic being displayed on top of the video content. According to another embodiment of the present invention, the high resolution graphic and the video content are blended together rather than just overlaid.

Typically a transport stream comprises packets of data, each packet having a packet header. The packet header includes information about the data packet, including a packet identifier (PID) identifying the track to which the data packet belongs. The packet identifier (PID) is useful for determining such things as the order of data packets, the type of data packets and the like. Similarly, a subtitle track comprises packets of subtitle data i.e. subtitle packets, also having packet identifiers. This information may be used either by the track inserter in combining the subtitle track with the audio/video tracks or in the host device to separate a particular subtitle track from the other audio/video tracks

A data packet may comprise program clock reference (PCR) information. The PCR information is based on a value of the transmission system's internal clock when the data packet was generated or transmitted. The PCR information is useful for the host device to synchronise its internal clock to the transmission system's internal clock. In this manner the control module is able to ensure that audio/video content is processed in the control module at the same speed as it was assembled at the transmitting entity.

Furthermore, a data packet may comprise a presentation time stamp (PTS) which represents the time at which a particular video frame or audio frame in the data packet should be presented, the time being relative to the PCR.

The process of combining the subtitle track with the input transport stream (TSI) to form an output transport stream (TSO), as described above, may be accomplished by the track inserter (TI). This is illustrated in Fig. 2. The figure shows that a transport stream can comprise data packets known as video packets or audio packets, which carry video information and audio information respectively. The transport stream may also comprise stuffing packets. Stuffing packets are generally known within the domain of digital media transmission and more particularly in broadband packet switching networks. The use of such stuffing packets allows for a constant bit-rate transport stream to be generated from a variable bit-rate transport stream. In the track insertion process, care must be taken to maintain a constant delay (DEL) between the reception of a particular data packet from the input transport stream (TSI) and the transmission of that transport packet in the output transport stream (TSO). This constant delay is determined based on the maximum time it takes for the control module to accomplish any processing involved in preparing the subtitle track and/or decrypting the data packets (PDEL) where necessary. The constant delay is therefore at least as high as the maximum processing and/or decoding time (PDEL). If this delay were not to be maintained constant, then the resulting output transport stream (TSO) would present jitter due to mismatches or other anomalies in program clock reference (PCR) information. According to an embodiment of the present invention, the subtitle packets (SP) resulting from the conversion of the generated data representing the high resolution graphic are held in a queue. As long as data packets (DP) including video packets (VP) or audio packets (AP) are detected in the input transport stream (TSI), these packets are placed in corresponding positions in the output transport stream (TSO) and therefore have a characteristic delay (processing and/or decoding time (PDEL)) with respect to the input transport stream depending on whatever processing is made on the input transport stream. Whenever a stuffing packet (STF) is detected in the input transport stream (TSI), the next subtitle packet (SP) in the queue is placed at the corresponding position in the output transport stream (TSO). If further stuffing packets (STF) are detected in the input transport stream and no more subtitle packets are available in the queue, then the stuffing packet is placed at the corresponding position in the output transport stream.

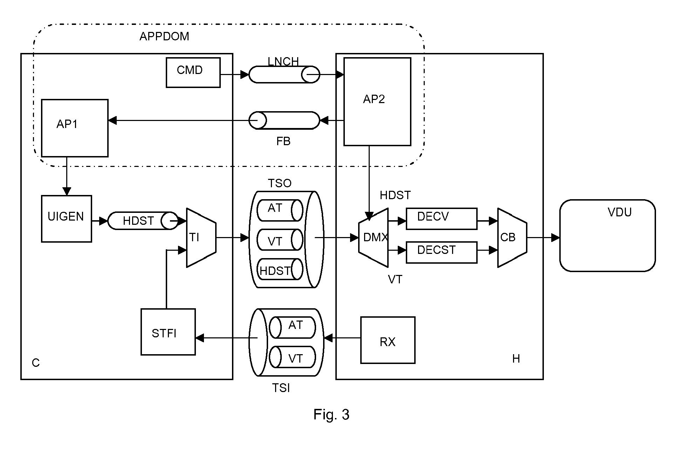

From the discussion above, it follows that for a given input transport stream, the number of opportunities to be able to introduce a subtitle packet is equal to the number of stuffing packets present in the input transport stream. According to another embodiment of the present invention, the number of opportunities for including a subtitle packet, and therefore the capacity for including subtitle packets, is artificially increased by adding extra stuffing packets into the input transport stream, either by a dedicated stuffing packet inserter before the input transport stream gets to the track inserter, or as an extra process carried out within the track inserter. By adding, it is understood to mean inserting a new stuffing packet between data packets or existing stuffing packets in the input transport stream. This has the automatic effect of increasing the bit rate of the output transport stream with respect to the input transport stream since the track inserter will strive to maintain any timing constraints given in the input transport stream. As mentioned before, a data packet may comprise program clock reference information (PCR). By maintaining timing constraints, it is meant that any program clock reference information is respected such that the time difference between successive data packets having PCR information in the input transport stream is maintained, by the track inserter for example, in the output transport stream. This has the effect of increasing the bit rate in the output transport stream with respect to the input transport stream. Fig. 3 illustrates a system devised to carry out an embodiment such as this, with the control module comprising a stuffing packet inserter (STFI) to receive the input transport stream and to insert stuffing packets, thereby creating a stuffed input transport stream before going to the track inserter. The system of Fig. 1 could equally be used to carry out this embodiment, in which case the function of adding extra stuffing packets is carried out by the track inserter.

According to a further embodiment of the present invention, the track inserter (TI) is able to program a presentation time for a particular graphic. In order to do this a presentation time stamp (PTS) associated with the graphic is set in the subtitle packet comprising the data representing the graphic. In this way the graphic can be presented at the desired time.

The user may interact with the graphic display by performing an action, for example clicking an icon or entering characters into a field or moving an object on the screen, and the host sends feedback information (FB) depending on the user's action to the control module via the application interface. The user interface generator takes this feedback information as a further variable in the process of generating the graphic thereby completing a feedback loop where the user's actions will allow the user interface to be appropriately updated. For example, an action performed by a user may simply be the clicking of an icon. That icon may change colour to signify that it has been selected. The user may drag a boundary of an icon thus changing its shape or he may drag an entire icon thus changing its position. The feedback information therefore may describe changes to a graphic's attributes or properties, affecting the visual aspects of the graphic on the display. A drag of a boundary could represent a change in dimension of the object or a drag of a complete icon would represent a change in its position. A click on an icon could lead to a change in its colour and so on. The feedback information received from the host by the control module allows the execution of the controller application to be influenced to take into account the updates to a graphic's visual aspects such as colour, position or shape and the data representing the graphic, generated by the controller application, will reflect those updates.

## Claims

1. A method for controlling a host device to render a graphic having a first resolution on a display having the first resolution, said method comprising:
receiving a first transport stream in a control module, said first transport stream comprising audio/video content;
executing a controller application in the control module, said execution at least:
generating data representing the graphic having the first resolution and converting said data to give a subtitle track; and
combining the subtitle track with the first transport stream to give a second transport stream;
transmitting the second transport stream from the control module to the host device;
executing a host application in the host device, said execution at least:
extracting the subtitle track from the second transport stream;
decoding the subtitle track in the host device to give the graphic having the first resolution; and
rendering the graphic having the first resolution on the display.

2. The method according to claim 1, wherein said subtitle track comprises at least one subtitle packet, said input transport stream comprises at least one data packet and at least one stuffing packet, said combining comprising:
maintaining a subtitle packet queue having at least a front position, said subtitle queue comprising said at least one subtitle packet at said front position;
copying the at least one data packet from the input transport stream to a corresponding position in the output transport stream; and
if the subtitle packet queue has a subtitle packet, then:
replacing the at least one stuffing packet by the subtitle packet,
said replacement occurring at a corresponding position in the output transport stream; otherwise
copying the at least one stuffing packet from the input transport stream to a corresponding position in the output transport stream.

3. The method according to either of claims 1 or 2, wherein said combining further comprises inserting at least one further stuffing packet in the input transport stream.

4. The method according to any of claims 1 or 3, wherein said extraction further yields a video track, said method comprising:
decoding the video track in the host device to give the video content;
combining said graphic with the video content in the host device to give an enhanced video content; and
rendering the enhanced video content on the display.

5. The method according to any of claims 1 to 4, wherein said host application is loaded into the host device from the control module via an application interface.

6. The method according to any of claims 1 to 5, wherein the host application is configured to process graphics having a second resolution lower than the first resolution.

7. The method according to any of claims 1 to 6, wherein said control method is dependent on a user activity, said data representing the graphic including properties which determine at least a visual aspect of the graphic on the display, said control method further comprising:
generating feedback information by the host device, said feedback information being dependant on the user activity; and
using the feedback information to influence the execution of the controller application including updating the properties of the graphic.

8. The method according to claim 7, wherein said feedback information is received via the application interface.

9. The method according to any of claims 1 to 8, wherein the first transport stream is received from the host device.

10. The method according to any of claims 1 to 9, wherein the first transport stream is received via a transport stream interface

11. The method according to any of claims 1 to 10, wherein the second transport stream is transmitted to the host device via the transport stream interface.

12. The method according to any of claims 1 to 11, wherein the first transport stream is encrypted and the control module decrypts the first transport stream.

13. A control module comprising:
a memory to store a host application;
means to load the host application into a host device via an application interface;
means to generate data representing a graphic;
means to receive a first transport stream via a transport stream interface;
means to convert the data representing the graphic to give a subtitle track;
means to combine the subtitle track with the first transport stream to give a second transport stream; and
means to transmit the second transport stream to the host device via the transport stream interface.

14. The control module according to claim 13, wherein it further comprises:
means to receive feedback information via the application interface; and
means to use said feedback information to influence the generation of the data representing the graphic.

15. The control module according to either of claims 13 or 14, wherein said means to combine the subtitle track with the first transport stream comprises means to insert at least one stuffing packet into the input transport stream.
